# EUROPEAN PATENT SPECIFICATION

(11) **EP 3 470 719 B1**
(45) Date of publication and mention of the grant of the patent: **13.10.2021**
(21) Application number: 17810185.3
(22) Date of filing: 31.05.2017
(51) Int. Cl.: F16L 11/11, F16L 11/115

(54) **COMPOUND TUBE**
VERBUNDROHR
TUBE COMPOSITE

(30) Priority: 09.06.2016 JP 2016115523
(43) Date of publication of application: 17.04.2019
(73) Proprietor: Bridgestone Corporation, Tokyo 104-8340 (JP)
(72) Inventor: MITSUHASHI, Kohei, Tokyo 104-8340 (JP)
(74) Representative: Oxley, Robin John George
(86) International application number: PCT/JP2017/020339
(87) International publication number: WO 2017/213007

(56) References cited:
- DE-A1-102005 020 603
- GB-A- 2 311 114
- JP-A- H03 292 487
- JP-A- 2002 039 446
- JP-A- 2004 044 780
- JP-A- 2004 322 583
- JP-A- 2008 175 270
- JP-A- 2008 202 795
- JP-A- 2012 104 727
- JP-U- 3 183 804
- JP-U- H0 391 596
- JP-U- S6 010 984
- US-A- 5 648 040

## Description

### Technical Field

The present invention relates to a composite pipe having a multilayer structure.

### Background Art

Conventionally, various pipes to be used for covering piping in order to protect the piping have been proposed. For example, Japanese Patent Application Laid-Open (JP-A) No. 2015-48909 discloses a corrugated pipe in which piping material is stored.

A convoluted flexible protective sleeve for a pipe is disclosed in document GB 2 311 114 A.

### SUMMARY OF INVENTION

### Technical Problem

However, a corrugated pipe disclosed in JP-A No. 2015-48909 is based on the premise that the work of inserting the piping material into the corrugated pipe is performed, and it is not supposed to expose an end portion of inserted piping material in order to connect the end portion with a joint or the like. Accordingly, it is impossible to deform the corrugated pipe in the axial direction in order to expose an end portion of the piping material covered with the corrugated pipe. Moreover, in the case of deforming the corrugated pipe, it is required to prevent the appearance after deformation from being impaired.

The present invention has been made in view of these facts, and an object thereof is to provide a composite pipe capable of suppressing deterioration of the appearance while deforming a coating layer so as to expose an end portion of an inner pipe body.

### Solution to Problem

A composite pipe according to the first aspect of the invention includes: a tubular pipe body; and a coating layer, which has a concertinaed shape obtained by forming, alternately in an axial direction of the pipe body, an annular ridge portion that is formed in a tubular shape, covers the outer circumference of the pipe body, and is convex toward an outer side in a radial direction, and an annular valley portion that has a shorter axial length than the ridge portion and has a concave outer side in the radial direction , the coating layer being configured to be shortened in the axial direction while being guided by the outer circumference of the pipe body.

In a composite pipe according to the first aspect of the invention, a coating layer configured to cover the outer circumference of the pipe body has a concertinaed shape. The coating layer is configured to be shortened in the axial direction while being guided by the outer circumference of the pipe body. The annular valley portion having a concave outer side in the radial direction of the coating layer has an axial length shorter than the annular ridge portion that is convex toward outer side in the radial direction. Accordingly, when force is applied to the coating layer in a direction in which the coating layer is shortened in the axial direction, the ridge portion is first deformed so as to bulge outward in the radial direction, and subsequently, an inflection part between a ridge portion and a valley portion is deformed such that adjacent ridge portions get close to each other. This makes it possible to easily deform the concertinaed-shaped coating layer and expose an end portion of the pipe body. Moreover, even if the bending angle or the thickness of the coating layer varies somewhat, it is possible to suppress bulging outward in the radial direction of the valley portion or getting into a deformation state distorted with adjacent ridge portions kept away from each other, and it is possible to suppress deterioration of the appearance of the shortened coating layer.

In a composite pipe according to the second aspect of the invention, the axial length of the ridge portion is 1.2 times or more the axial length of the valley portion.

By thus making the axial length of the ridge portion 1.2 times or more the axial length of the valley portion, it is possible to easily deform the ridge portion so as to bulge outward in the radial direction when force is applied in a direction to shorten the coating layer in the axial direction.

In a composite pipe according to the third aspect of the invention, the thickness of the ridge portion of the coating layer is smaller than the thickness of the valley portion.

By thus making the thickness of the ridge portion smaller than the thickness of the valley portion, it is possible to easily deform the ridge portion so as to bulge outward in the radial direction when force is applied in a direction to shorten the coating layer in the axial direction.

In a composite pipe according to the fourth aspect of the invention, the thickness of the coating layer is from 0.1 mm to 0.4 mm.

In order to easily shorten the coating layer in the axial direction, the thickness of the coating layer is preferably from 0.1 mm to 0.4 mm.

In a composite pipe according to the fifth aspect of the invention, the radius difference at outer surfaces of the ridge portion and the valley portion is 800% or less of the average thickness of the coating layer.

In a case in which the radius difference at outer surfaces of the ridge portion and the valley portion is large, the valley portion hardly bulges outward in the radial direction at the time of shortening or hardly gets into a deformation state distorted with adjacent ridge portions kept away from each other even if a part along the axial direction of the ridge portion is not deformed. In order to suppress getting into the above-described deformation state, it is effective to make the axial length of the ridge portion longer than the axial length of the valley portion when the radius difference on outer surfaces of the ridge portion and the valley portion is 800% or less of the average thickness of the coating layer, and it is more effective when the radius difference is 600% or less.

A composite pipe according to the sixth aspect of the invention includes an intermediate layer disposed between the pipe body and the coating layer. This is a mandatory feature of the present invention.

By thus including the intermediate layer, it becomes possible to suppress adhering to each other of the outer circumference of the pipe body and the inner circumference of the coating layer, which makes it difficult to move relative to each other.

In a composite pipe according to the seventh aspect of the invention, the intermediate layer is formed in a sheet-like shape and contacts an entire outer surface of the pipe body.

By putting the sheet-like intermediate layer into full contact with the outer surface of the pipe body, the contact area between the intermediate layer and the pipe body is increased. Accordingly, after the coating layer is shortened together with the intermediate layer to expose an end portion of the pipe body, it becomes easy to maintain the shortened state by frictional force.

In a composite pipe according to the eighth aspect of the invention, the intermediate layer has a compression clamp portion that is compressed and clamped between the valley portion and the pipe body, and a convex portion protruded into a ridge space between the inner side of the ridge portion in the radial direction and the pipe body. This is a mandatory feature of the present invention.

By thus providing the compression clamp portion in the intermediate layer, the intermediate layer is put into close contact with the coating layer at the compression clamp portion. Moreover, by providing the convex portion protruded into the ridge space in the intermediate layer, the convex portion is engaged between sidewalls of adjacent valley portions. Accordingly, when the coating layer is shortened in the axial direction, the intermediate layer easily follows the movement of the coating layer, and the intermediate layer can be easily shortened together with the coating layer.

### Advantageous Effects of Invention

According to the invention, it is possible to suppress deterioration of the appearance while deforming the coating layer to expose an end portion of the inner pipe body.

### BRIEF DESCRIPTION OF DRAWINGS

Fig. 1 is a perspective view illustrating a composite pipe according to an embodiment of the invention.
Fig. 2 is a longitudinal sectional view illustrating a composite pipe according to an embodiment of the invention.
Fig. 3 is a partial enlarged view of a longitudinal section of a composite pipe according to an embodiment of the invention.
Fig. 4 is a view illustrating a manufacturing process of a composite pipe according to the invention.
Fig. 5 is a longitudinal sectional view illustrating a state where an end portion of a pipe body of a composite pipe according to an embodiment of the invention is exposed.
Fig. 6 is a view illustrating the process of deforming the coating layer and the intermediate layer to be shortened in the part of the longitudinal section of Fig. 3.
Fig. 7 is a view illustrating a state where the coating layer and the intermediate layer are deformed to be shortened in the part of the longitudinal section of Fig. 3.
Fig. 8 is a perspective view illustrating a state where an end portion of a pipe body of a composite pipe according to an embodiment of the invention is exposed.

### DESCRIPTION OF EMBODIMENTS

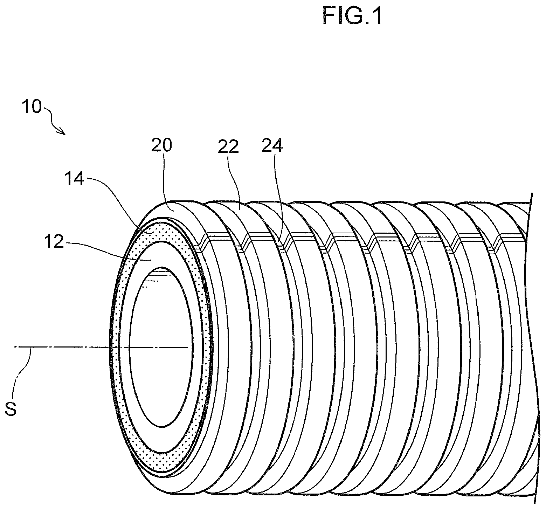

The following description will explain modes for carrying out the invention with reference to the drawings. As illustrated in Fig. 1, a composite pipe 10 according to this embodiment includes a pipe body 12, an intermediate layer 14, and a coating layer 20.

The pipe body 12 is a tubular resin pipe and can be made of material such as polyolefin, polybutene, polyethylene, crosslinked polyethylene, polypropylene, or vinyl chloride.

The coating layer 20 is formed to have a tubular shape and covers the outer circumference of the pipe body 12 and the intermediate layer 14. The intermediate layer 14 is disposed between the pipe body 12 and the coating layer 20. The coating layer 20 is resinous and can be made of material such as polyolefin, polybutene, polyethylene, polypropylene, crosslinked polyethylene, or vinyl chloride, and low-density polyethylene is more preferably used. Moreover, the MFR (Melt Flaw Rate) of resin to be used is preferably from 0.25 to 0.5. By setting the MFR to 0.25 or larger, the resin of the coating layer 20 easily enters into air bubbles of the intermediate layer 14 formed of foamed resin, and the adhesive strength between a compression clamp portion 14A of the intermediate layer 14 and a valley portion 24 of the coating layer 20, which will be described later, can be increased. Moreover, since the MFR of the coating layer 20 is 0.5 or smaller, the flowability obtained when resin composition to be used for forming a coating layer is melted is adjusted to an appropriate range, flowing into a joining part of divided molds (e.g., a corrugating mold 36 which will be described later) of the molten material is suppressed, and generation of burrs on the outer side in the radial direction of the coating layer 20 is suppressed. Therefore, becoming an obstacle to the operation of shortening and displacing the coating layer 20 in order to expose an end portion of the pipe body 12 of the burrs is suppressed, and better elastic property (turning-over property) is obtained. Moreover, the step of removing burrs generated on the outer side in the radial direction of the coating layer 20 is omitted, and complication in manufacturing of a composite pipe is suppressed.

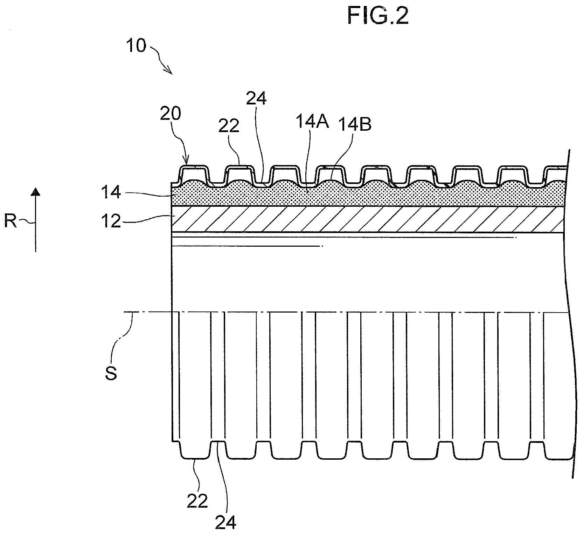

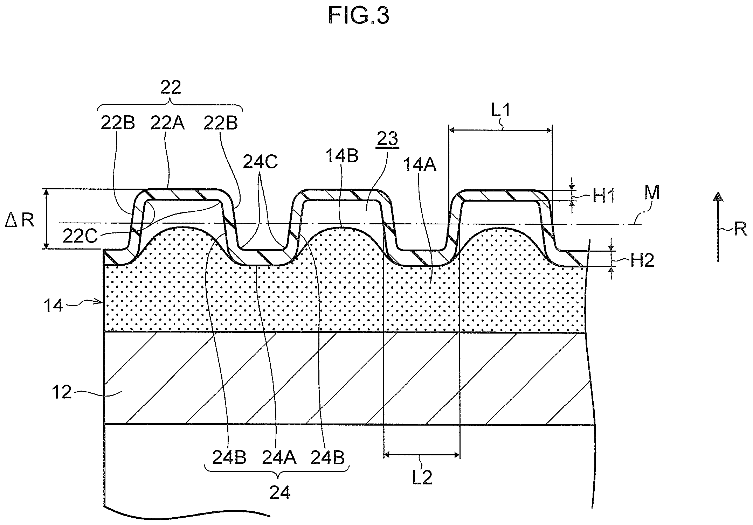

As also illustrated in Fig. 2, the coating layer 20 is formed to have a concertinaed shape, and an annular ridge portion 22 being convex outward in the radial direction, and an annular valley portion 24 having a concave outer side in the radial direction are alternately and continuously formed in the axial direction S of the pipe body 12. The ridge portion 22 is disposed at an outer side in the radial direction R than the valley portion 24. When referring to a part of the coating layer 20 on the outermost side in the radial direction of the concertinaed shape as an outer wall 22A and a part on the innermost side in the radial direction as an inner wall 24A, the outer side in the radial direction and the inner side in the radial direction with respect to a boundary of an intermediate portion M between the outer wall 22A and the inner wall 24A in the radial direction are respectively referred to as a ridge portion 22 and a valley portion 24 as illustrated in Fig. 3. The intermediate portion M is a part equidistant from the outer surface of the outer wall 22A and the inner surface of the inner wall 24A. Since the positions of the outer surface of the outer wall 22A and the inner surface of the inner wall 24A may be somewhat different depending on the position in the axial direction, it is to be noted that the intermediate portion M is equidistant from average positions of the outer surface of the outer wall 22A and the inner surface of the inner wall 24A.

The ridge portion 22 has an outer wall 22A extending in the axial direction S, and side walls 22B extending from both ends of the outer wall 22A along the radial direction R. An outer bent portion 22C is formed between the outer wall 22A and each side wall 22B. The valley portion 24 has an inner wall 24A extending in the axial direction S, and side walls 24B extending from both ends of the inner wall 24A in the radial direction R. An inner bent portion 24C is formed between the inner wall 24A and each side wall 24B.

On the inner side in the radial direction of the ridge portion 22 of the coating layer 20, a ridge space 23 having a concave inner side in the radial direction is formed. In the ridge space 23, a convex portion 14B of the intermediate layer 14, which will be described later, is inserted.

The length L1 of the ridge portion 22 in the axial direction S is set to be longer than the length L2 of the valley portion 24 in the axial direction S. The length L1 is preferably 1.2 times or more of the length L2 in order to ensure easiness of deformation of the outer wall 22A at the time of shortening deformation, which will be described later. It is to be noted that the length L2 is preferably 0.8 mm or longer. When the length L2 is shorter than 0.8 mm, the width of the valley portion 24 is too small, and therefore a part of the mold corresponding to the valley portion 24 is thin and is easily broken when irregularities are applied with a mold after extrusion in order to manufacture the coating layer 20, and it is difficult to mold. Moreover, the length L1 is preferably 5 times or less of the length L2. By setting the length L1 to 5 times or less of the length L2, flexibility of the compound pipe 10 can be maintained. Moreover, when the length L1 is too long, the contact area with the ground becomes large, and this makes it difficult to achieve construction of the composite pipe 10.

As illustrated in Fig. 3, it is to be noted that the length L1 is the distance between the outer sides in the axial direction S of the coating layer 20 (distance between parts of the coating layer 20 exposed to the outside) in a part where the intermediate portion M and the coating layer 20 intersect, and the length L2 is the distance between the outer sides in the axial direction S of the coating layer 20 (distance between inner parts of the coating layer 20 facing the side of the intermediate layer 14) in a part where the intermediate portion M and the coating layer 20 intersect.

In order to shorten the coating layer 20, the thickness of the coating layer 20 is preferably 0.1 mm or larger at the thinnest part, and 0.4 mm or smaller at the thickest part. The thickness HI of the outer wall 22A is smaller than the thickness H2 of the inner wall 24A. The thickness HI is preferably 0.9 times or less of the thickness H2 in order to ensure easiness of deformation of the outer wall 22A at the time of shortening deformation, which will be described later.

The radius difference ΔR on outer surfaces of the ridge portion 22 and the valley portion 24 is 800% or less of the average thickness of the coating layer 20. In a case in which the radius difference ΔR is large, the valley portion 24 hardly bulges outward in the radial direction at the time of shortening or hardly gets into a deformation state distorted with adjacent ridge portions 22 kept away from each other even if a part along the axial direction S of the ridge portion 22 is not deformed. When the radius difference ΔR is 800% or less of the average thickness of the coating layer 20, it is effective to make the length of the ridge portion 22 in the axial direction S longer than the axial length of the valley portion 24 in order to suppress the above-described deformation state. It is to be noted that it is more effective when the radius difference is 600% or less.

The intermediate layer 14 is formed to have a sheet-like shape and is disposed between the pipe body 12 and the coating layer 20. The inner circumferential surface of the intermediate layer 14 is formed to be flat and covers the outer circumference of the pipe body 12 in full contact with the outer circumference of the pipe body 12. It is to be noted that "in full contact" here means not that all parts are tightly adhered but that substantially the entire surface is in contact. Accordingly, a case in which a joint part of the sheet-like intermediate layer 14 is partially spaced apart, or a case in which a wrinkled part between the pipe body 12 and the coating layer 20 is partly spaced apart is included.

Although polyurethane, polystyrene, polyethylene, polypropylene, ethylene propylene diene rubber, and a mixture of these resins, for example, can be used for the intermediate layer 14, polyurethane is more preferable. The intermediate layer 14 can be molded by, for example, winding a sheet-like foam member, which is formed like a band so as to have a width substantially equal to the outer circumference of the pipe body 12, around the pipe body 12 while supplying resin to be the coating layer 20 to the outer circumference. In this embodiment, an elastically deformable foam member is used for the intermediate layer 14.

In the intermediate layer 14, a compression clamp portion 14A compressed and clamped between the inner wall 24A of the valley portion 24 and the pipe body 12 is formed. The thickness of the intermediate layer 14 is larger than the difference between the outer circumference of the pipe body 12 and the radially inner side face of the inner wall 24A in a natural state (a state where no force such as compression or tension is applied). At the compression clamp portion 14A, the thickness of the intermediate layer 14 is made smaller than the thickness in the natural state by compression. The convex portion 14B is formed between adjacent compression clamp portions 14A of the intermediate layer 14. The convex portion 14B has a diameter larger than that of the compression clamp portion 14A and is protruded into the ridge space 23. In the ridge space 23, the apex (an outermost part in the radial direction) of the convex portion 14B and the outer wall 22A are spaced from each other. Regarding the intermediate layer 14, the compression clamp portion 14A and the convex portion 14B are alternately and continuously formed in the axial direction S, and the outer circumferential surface is corrugated.

The length in the axial direction S in the natural state in which the intermediate layer 14 is extracted from between the pipe body 12 and the coating layer 20 is preferably from 90% to 100% of the length of the coating layer 20 in the axial direction S. This is because the intermediate layer 14 and the coating layer 20 are likely to move relative to each other in the process of deforming the coating layer 20 to be shortened, and this may cause a situation that the intermediate layer 14 is not shortened and the outer circumferential end portion of the pipe body 12 cannot be exposed in a case in which the intermediate layer 14 is held in an extended state between the pipe body 12 and the coating layer 20. In order to suppress relative movement of the intermediate layer 14 and the coating layer 20, the length in the axial direction S of the intermediate layer 14 in the natural state is preferably set to from 90% to 100% of the axial length of the coating layer 20.

Next, a method of manufacturing the composite pipe 10 of this embodiment will be described.

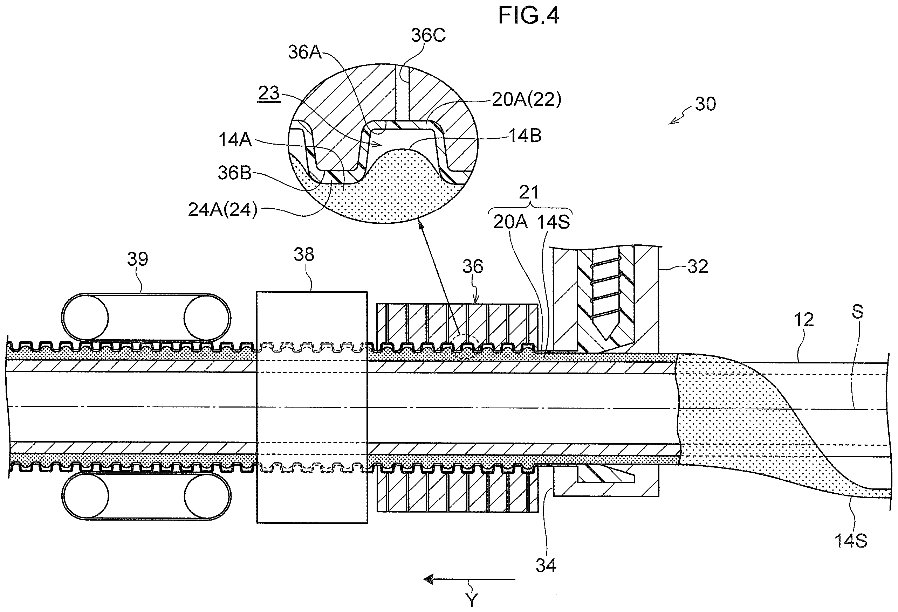

For manufacturing the composite pipe 10, a manufacturing apparatus 30 illustrated in Fig. 4 can be used, for example. The manufacturing apparatus 30 has an extruder 32, a die 34, a corrugating mold 36, a cooling tank 38, and a take-off device 39. In the manufacturing process of the composite pipe 10, the right side of Fig. 4 is the upstream side, and the pipe body 12 is manufactured while moving from the right side to the left side. Hereinafter, the direction of such movement will be referred to as a manufacturing direction Y. The die 34, the corrugating mold 36, the cooling tank 38, and the take-off device 39 are arranged in this order with respect to the manufacturing direction Y, and the extruder 32 is disposed above the die 34.

On the upstream side of the die 34, a pipe body 12 wound in a coil shape, and a sheet-like member 14S in which a foam member to constitute the intermediate layer 14 is wound in a roll shape are arranged (not shown). When being pulled in the manufacturing direction Y by the take-off device 39, the coil-shaped pipe body 12 and the roll-shaped sheet-like member 14S are continuously drawn out. On the outer circumferential surface of the continuously drawn-out pipe body 12, the sheet-like member 14S is wound around the entire circumference before reaching the die 34. It is to be noted that the sheet-like member 14S is put into a state having slack before reaching the die 34 and is inserted into the die 34, so that no tensile force is applied.

On the outer circumference of the sheet-like member 14S wound around the outer circumference of the pipe body 12, molten resin material is extruded from the die 34 into a cylindrical shape, and the resin layer 20A is formed. By using a low-density polyethylene (LDPE) having an MFR of 0.25 or larger as the resin here, the resin material easily enters into air bubbles of the foam member, and it becomes possible to join the sheet-like member 14S and the resin layer 20A.

After a tubular extrusion body 21 composed of the pipe body 12, the sheet-like member 14S, and the resin layer 20A is formed, a corrugating step is performed in a corrugating mold 36 disposed on the downstream side of the die 34. On the inner circumference of the corrugating mold 36, an annular cavity 36A is formed at a part corresponding to the ridge portion 22 of the coating layer 20, and an annular inner projection 36B is formed at a part corresponding to the valley portion 24. In each cavity 36A, a vent hole 36C having an end communicating with the cavity 36A and penetrating the corrugating mold 36 is formed. Air is sucked from the outside of the corrugating mold 36 via the vent hole 36C into the cavity 36A.

On the downstream side of the die 34, the corrugating mold 36 covers the outer circumference of the tubular extrusion body 21 while pressing the resin layer 20A by the inner projection 36B, and moves in the manufacturing direction Y together with the pipe body 12. At this time, air is sucked from the outside of the corrugating mold 36 to generate negative pressure in the cavity 36A. This causes the resin layer 20A to move outward in the radial direction, and a concertinaed-shaped coating layer 20 is formed along the corrugating mold 36. By using a low-density polyethylene (LDPE) having an MFR of 0.5 for the coating layer 20, the fluidity of the resin layer 20A is adjusted to an appropriate range, flowing into the joining part of the corrugating mold 36 is suppressed, and generation of burrs on the outer side in the radial direction of the coating layer 20 is suppressed.

At this time, the sheet-like member 14S enters into the cavity 36A in the ridge space 23 corresponding to the ridge portion 22 of the coating layer 20, and the convex portion 14B is formed. A part of the coating layer 20 corresponding to the inner wall 24A of the valley portion 24 is kept adhered to the coating layer 20 and compressed between the pipe body 12 and the inner wall 24A, and the compression clamp portion 14A is formed.

After the corrugating step is performed in the corrugating mold 36, the coating layer 20 is cooled in the cooling tank 38. The composite pipe 10 is manufactured in such a manner.

Next, the function of the composite pipe 10 of this embodiment will be described.

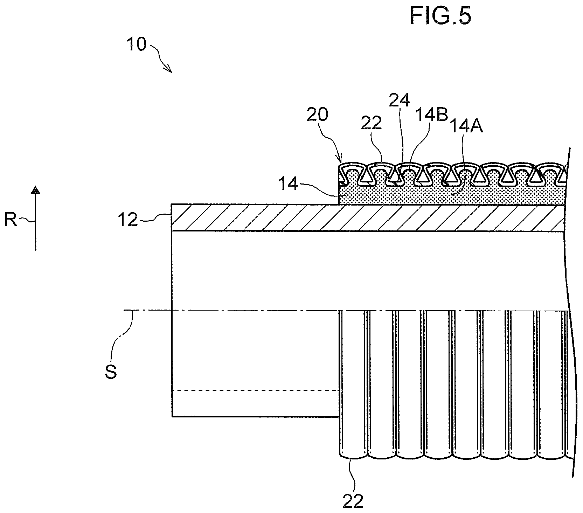

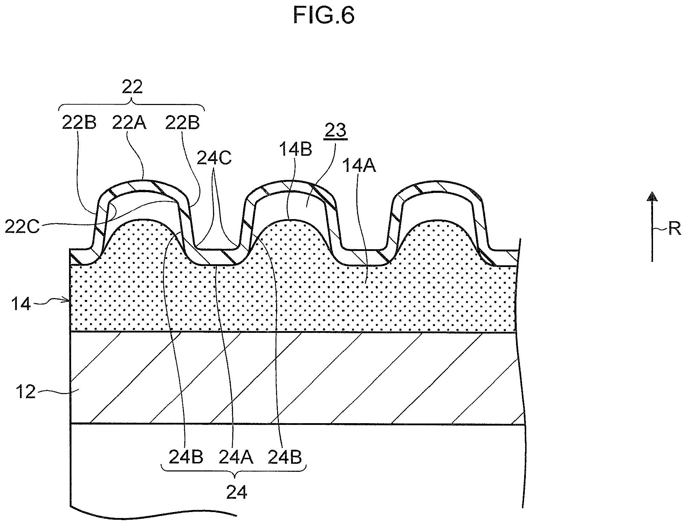

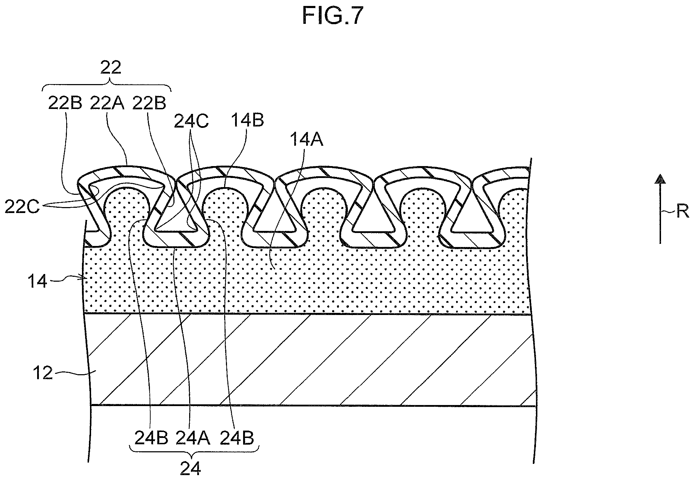

In the process of connecting the composite pipe 10 according to this embodiment with a joint, force in a direction to shorten the coating layer 20 in the axial direction S and expose the pipe body 12 is applied to the coating layer 20 in the state illustrated in Fig. 2. Here, when comparing the outer wall 22A of the ridge portion 22 and the inner wall 24A of the valley portion 24, the length L1 in the axial direction S is longer than L2, and the thickness HI is smaller than H2. Accordingly, the outer wall 22A is more easily deformed than the inner wall 24A and is deformed to bulge outward in the radial direction as illustrated in Fig. 6. Subsequently, the outer bent portion 22C of the ridge portion 22 and the inner bent portion 24C of the valley portion 24 are deformed such that adjacent ridge portions 22 get close to each other as illustrated in Fig. 7. In such a manner, the coating layer 20 at one end portion moves in a direction to expose the pipe body 12 as illustrated in Fig. 5.

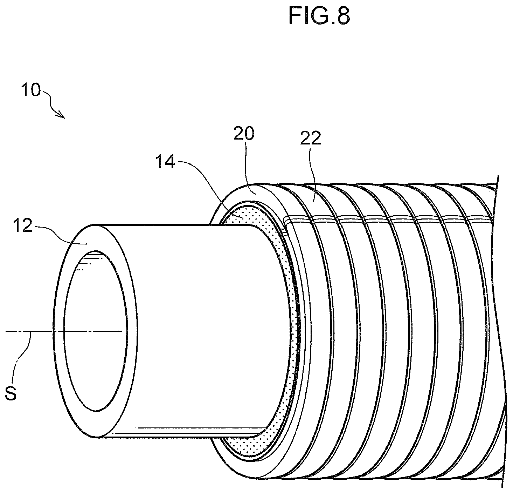

At this time, the compression clamp portion 14A is brought into close contact with the coating layer 20, the convex portion 14B is engaged between sidewalls 24B of adjacent valley portions 24, and the intermediate layer 14 is shortened together with the coating layer 20. This makes it possible to expose an end portion of the pipe body 12 as illustrated in Fig. 8.

According to the composite pipe 10 of this embodiment, the outer wall 22A is deformed to bulge in the process of shortening the coating layer 20 as described above. Accordingly, even if the bending angle or the thickness of the coating layer 20 varies somewhat, it is possible to suppress bulging outward in the radial direction of the valley portion 24 or getting into a deformation state distorted with adjacent ridge portions 22 kept away from each other. This makes it possible to suppress deterioration of the appearance of the shortened coating layer 20.

Although the thickness HI of the outer wall 22A is made smaller than the thickness H2 of the inner wall 24A in this embodiment, it is to be noted that the thickness HI may be substantially equal to the thickness H2.

Moreover, although the outer wall 22A is formed to have a substantially linear shape along the axial direction S in this embodiment, the outer wall 22A may have an arc shape bulging outward in the radial direction. Furthermore, the inner wall 24A may have an arc shape bulging inward in the radial direction.

Moreover, the intermediate layer 14 is provided between the pipe body 12 and the coating layer 20. By providing the intermediate layer 14, it becomes possible to suppress adhering to each other of the coating layer 20 and the pipe body 12, which makes it difficult to move relative to each other. Moreover, using slippage between the intermediate layer 14 and the pipe body 12, it becomes possible to cause the pipe body 12, and the intermediate layer 14 and the coating layer 20 to move relative to each other, so that an end portion of the pipe body 12 can be easily exposed.

Moreover, the intermediate layer 14 is in full contact with the outer circumferential surface of the pipe body 12 in this embodiment. Accordingly, after the pipe body 12, and the intermediate layer 14 and the coating layer 20 are relatively moved to expose an end portion of the pipe body 12, the intermediate layer 14 and the coating layer 20 can be easily held at a shortened position by frictional force between the outer circumference of the pipe body 12 and the inner circumference of the intermediate layer 14.

Moreover, the compression clamp portion 14A of the intermediate layer 14 is brought into close contact with the coating layer 20, and the convex portion 14B is engaged between sidewalls 24B of adjacent valley portions 24 in this embodiment. Accordingly, the intermediate layer 14 easily follows the movement of the coating layer 20, being left on the outer circumference of the pipe body 12 of the intermediate layer 14 is suppressed, and the intermediate layer 14 can be easily shortened together with the coating layer 20.

### <Test Example>

In order to verify the effect of the invention, evaluation was made regarding three examples including Example and Comparative Examples 1 and 2 in which a coating layer having a different length L1 of the ridge portion 22 in the axial direction S and a different length L2 of the valley portion 24 in the axial direction S was formed as illustrated in Table 1. Evaluation was ranked with Evaluations A, B, and C on the easiness of shortening and the shortened state when shortening the coating layer. Evaluation A stands for good, Evaluation B stands for ordinary, and Evaluation C stands for bad. Used composite pipes had common conditions, except L1 and L2, such as an outer diameter of 23.5 mm, an inner diameter of 20.0 mm, a height (radius difference ΔR) of the ridge portion 22 of 1.75 mm, a thickness HI of the outer wall 22A of the ridge portion 22 of 0.25 mm, and a thickness H2 of the inner wall 24A of 0.37 mm. The material of the coating layer was a low-density polyethylene having an MFR of approximately 0.4. In all cases, shortening of the coating layer was achieved by applying force of 1 N in the axial direction.

**[Table 1]**

| | EXAMPLE | COMPARATIVE EXAMPLE 1 | COMPARATIVE EXAMPLE 2 |
|---|---|---|---|
| L1 (mm) | 2.1 | 1.8 | 1.6 |
| L2 (mm) | 1.5 | 1.8 | 2.0 |
| EASINESS OF SHORTENING | A | C | C |
| SHORTENED STATE | A | C | C |

Regarding Example, the easiness of shortening the coating layer was good, and the shortened state was also good as illustrated in Table 1. Regarding Comparative Examples 1 and 2, the valley portion 24 swelled outward in the radial direction when shortening the coating layer, and the coating layer could not be shortened smoothly. Moreover, the valley portion 24 also swelled in the shortened state, which was a defect.

### Reference Signs List

- 10: Composite Pipe
- 12: Pipe Body
- 14: Intermediate Layer
- 14A: Compression Clamp Portion
- 14B: Convex Portion
- 14S: Sheet-like Member
- 20: Coating Layer
- 22: Ridge Portion
- 22A: Outer Wall
- 23: Ridge Space
- 24: Valley Portion
- 24A: Inner wall
- S: Axial Direction

## Claims

1. A composite pipe (10), comprising:
a tubular pipe body (12);
a coating layer (20), which has a concertinaed shape obtained by forming, alternately in an axial direction (S) of the pipe body (12), an annular ridge portion (22) that is formed in a tubular shape, covers an outer circumference of the pipe body (12), and is convex toward an outer side in a radial direction (R), and an annular valley portion (24) that has a shorter axial length than the ridge portion (22) and has a concave outer side in the radial direction (R), the coating layer (20) being configured to be shortened in the axial direction (S) while being guided by an outer circumference of the pipe body (12); and
an intermediate layer (14) disposed between the pipe body (12) and the coating layer (20), **characterised in that**
the intermediate layer (14) has a compression clamp portion (14A) that is compressed and clamped between the valley portion (24) and the pipe body (12), and a convex portion (14B) that protrudes into a ridge space (23) between an inner side of the ridge portion (22) in the radial direction (R) and the pipe body (12).

2. The composite pipe (10) according to claim 1, wherein the axial length of the ridge portion (22) is 1.2 times or more the axial length of the valley portion (24).

3. The composite pipe (10) according to claim 1 or 2, wherein a thickness of the ridge portion (22) of the coating layer (20) is smaller than a thickness of the valley portion (24).

4. The composite pipe (10) according to any one of claims 1 to 3, wherein a thickness of the coating layer (20) is from 0.1 mm to 0.4 mm.

5. The composite pipe (10) according to any one of claims 1 to 4, wherein a radius difference at outer surfaces of the ridge portion (22) and the valley portion (24) is 800% or less of an average thickness of the coating layer (20).

6. The composite pipe (10) according to any one of claims 1 to 5, wherein the intermediate layer (14) is formed in a sheet-like shape and contacts an entire outer surface of the pipe body (12).

## Patentansprüche

1. Verbundrohr (10), das Folgendes umfasst:
einen röhrenförmigen Rohrkörper (12),
eine Überzugsschicht (20), die eine zusammengefaltete Gestalt aufweist, die erhalten wird durch Formen, in einer axialen Richtung (S) des Rohrkörpers (12), eines ringförmigen Stegabschnitts (22), der in einer röhrenförmigen Gestalt geformt ist, einen Außenumfang des Rohrkörpers (12) bedeckt und zu einer in einer radialen Richtung (R) äußeren Seite hin konvex ist, und einen ringförmigen Talabschnitt (24), der eine kürzere axiale Länge aufweist als der Stegabschnitt (22) und eine konkave in der radialen Richtung (R) äußere Seite aufweist, wobei die Überzugsschicht (20) dafür konfiguriert ist, in der axialen Richtung (S) verkürzt zu werden, während sie von einem Außenumfang des Rohrkörpers (12) geführt wird, und
eine Zwischenschicht (14), die zwischen dem Rohrkörper (12) und der Überzugsschicht (20) angeordnet ist, **dadurch gekennzeichnet, dass**
die Zwischenschicht (14) einen Kompressionsklemmabschnitt (14A), der zwischen dem Talabschnitt (24) und dem Rohrkörper (12) komprimiert und geklemmt wird, und einen konvexen Abschnitt (14B), der in einen Stegraum (23) zwischen einer in der radialen Richtung (R) inneren Seite des Stegabschnitts (22) und dem Rohrkörper (12) vorspringt, aufweist.

2. Verbundrohr (10) nach Anspruch 1, wobei die axiale Länge des Stegabschnitts (22) das 1,2-Fache oder mehr der axialen Länge des Talabschnitts (24) beträgt.

3. Verbundrohr (10) nach Anspruch 1 oder 2, wobei eine Dicke des Stegabschnitts (22) der Überzugsschicht (20) kleiner ist als eine Dicke des Talabschnitts (24).

4. Verbundrohr (10) nach einem der Ansprüche 1 bis 3, wobei eine Dicke der Überzugsschicht (20) von 0,1 mm bis 0,4 mm beträgt.

5. Verbundrohr (10) nach einem der Ansprüche 1 bis 4, wobei eine Radiusdifferenz an Außenflächen des Stegabschnitts (22) und des Talabschnitts (24) 800 % oder weniger einer durchschnittlichen Dicke der Überzugsschicht (20) beträgt.

6. Verbundrohr (10) nach einem der Ansprüche 1 bis 5, wobei die Zwischenschicht (14) in einer bahnartigen Gestalt geformt ist und eine gesamte Außenfläche des Rohrkörpers (12) berührt.

## Revendications

1. Tube composite (10), comprenant:
un corps de tube tubulaire (12) ;
une couche de revêtement (20) qui a une forme en accordéon établie en formant, par alternance, dans une direction axiale (S) du corps du tube (12), une partie de nervure annulaire (22) formée en une forme tubulaire, recouvrant une circonférence externe du corps du tube (12) et est convexe vers un côté externe dans une direction radiale (R), et une partie de creux annulaire (24) ayant une longueur axiale inférieure à celle de la partie de nervure (22) et comportant un côté externe concave dans la direction radiale (R), la couche de revêtement (20) étant configurée pour être raccourcie dans la direction axiale (S) tout en étant guidée par une circonférence externe du corps du tube (12) ; et
une couche intermédiaire (14) disposée entre le corps du tube (12) et la couche de revêtement (20), **caractérisé en ce que** :
la couche intermédiaire (14) comporte une partie de serrage à compression (14A) comprimée et serrée entre la partie de creux (24) et le corps du tube (12), et une partie convexe (14B) débordant dan un espace de nervure (23) entre un côté interne de la partie de nervure (22), dans la direction radiale (R), et le corps du tube (12).

2. Tube composite (10) selon la revendication 1, dans lequel la longueur axiale de la partie de nervure (22) représente 1,2 fois ou plus la longueur axiale de la partie de creux (24).

3. Tube composite (10) selon les revendications 1 ou 2, dans lequel une épaisseur de la partie de nervure (22) de la couche de revêtement (20) est inférieure à une épaisseur de la partie de creux (24).

4. Tube composite (10) selon l'une quelconque des revendications 1 à 3, dans lequel une épaisseur de la couche de revêtement (20) est comprise entre 0,1 mm et 0,4 mm.

5. Tube composite (10) selon l'une quelconque des revendications 1 à 4, dans lequel une différence entre le rayon au niveau d'une surface externe de la partie de nervure (22) et de la partie de creux (24) représente 800% ou moins d'une épaisseur moyenne de la couche de revêtement (20).

6. Tube composite (10) selon l'une quelconque des revendications 1 à 5, dans lequel la couche intermédiaire (14) est formée en une forme de type feuille et contacte l'ensemble d'une surface externe du corps du tube (12).
